Europäisches Patentamt

European Patent Office

Office européen des brevets

(19)

(11) Veröffentlichungsnummer: **0 038 398**
**B1**

(12) **EUROPÄISCHE PATENTSCHRIFT**

(45) Veröffentlichungstag der Patentschrift:
06.07.83

(51) Int. Cl.³: **E 04 D 3/36,** E 04 D 13/03

(21) Anmeldenummer: **81100639.4**

(22) Anmeldetag: **29.01.81**

(54) **Dachelement in Tonnengewölbeform.**

(30) Priorität: **18.04.80 DE 8010662 U**

(43) Veröffentlichungstag der Anmeldung:
**28.10.81 Patentblatt 81/43**

(45) Bekanntmachung des Hinweises auf die Patenterteilung:
**06.07.83 Patentblatt 83/27**

(84) Benannte Vertragsstaaten:
**AT CH DE FR GB IT LI NL SE**

(56) Entgegenhaltungen:
**EP-A-0 023 969**
**DE-A-2 123 909**
**DE-A-2 129 557**
**DE-A-2 133 335**
**FR-A-2 036 158**

(73) Patentinhaber: **Röhm GmbH, Kirschenallee
Postfach 4242, D-6100 Darmstadt 1 (DE)**

(72) Erfinder: **Müller, Dieter, Adolf-Kolping-Strasse 1,
D-6102 Pfungstadt (DE)**
Erfinder: **Löbig, Inge, Kranichsteiner Strasse 65,
D-6100 Darmstadt (DE)**
Erfinder: **Kerk, Klaus, Bessunger Strasse 10a,
D-6103 Griesheim (DE)**

BUNDESDRUCKEREI BERLIN

## Dachelement in Tonnengewölbeform

Die Neuerung betrifft ein Dachelement in Form eines Tonnengewölbes. Aus der DE-A-2 107 728 sind Dachelemente in Form eines Tonnengewölbes bekannt, die sich zur Erstellung von großflächigen, vorzugsweise lichtdurchlässigen Bedachungen eignen. Der Nachteil der bekannten Gestaltung liegt in der Notwendigkeit, bei der Montage eine große Zahl von Verschraubungen anzubringen.

Bei einer weiteren bekannten handelsüblichen Gestaltung eines Dachelements in Tonnengewölbeform werden wesentlich weniger Verschraubungen für die Montage benötigt. Dieses bekannte Dachelement besteht aus wenigstens einem bogenförmigen Tragbügel und einer zylindrisch gewölten Kunststofftafel, die auf dem Tragbügel aufliegt, sowie wenigstens einem Halteband, welches die Kunststofftafel überspannt und diese auf dem Tragbügel festhält und an seinen Enden unter Zugspannung mittels Rastverbindungen an dem Tragbügel befestigt ist.

Die Rastverbindungen bestehen wenigstens an einem Ende des Haltebandes aus aneinander angepaßten Rastelementen, die unter Zugspannung lösbar in formschlüssigem Eingriff stehen. Durch eine Querwellung ist das Halteband elastisch gestaltet. Bei der Montage wird es in Längsrichtung so weit gedehnt, bis die Rastelemente am Ende des Haltebandes in formschlüssigen Eingriff mit den entsprechenden Rastelementen am Tragbügel gebracht werden können. Im einfachsten Fall bestehen die Rastelemente am Ende des Haltebandes aus einem durch Umbiegen des Endes erzeugten Haken, der um das untere Ende des Tragbügels oder an ein dort abgestütztes Gegenelement greift. Nach dem Einrasten des Haltebandes verbleibt dieses in einer ausreichenden Spannung, um die Kunststoffscheibe auf dem Tragbügel windsicher festzuhalten.

Die Querwellung des Haltebandes ist nicht nur vom ästhetischen Gesichtspunkt störend, sondern kann auch durch punkt- und linienförmige Belastungen der Kunststoffscheibe an den Unterkanten der einzelnen Wellungsbögen zu einer Beschädigung der Kunststoffplatte führen.

Derartige Beschädigungen können unter hohen Verkehrslasten, beispielsweise bei starken Windböen, zum Ausgangspunkt des Bruches der Kunststoffscheibe führen.

Es bestand daher die Aufgabe, bei Dachelementen in Form eines Tonnengewölbes von der oben beschriebenen Art die Querwellung des Haltebandes zu vermeiden, ohne auf den Vorteil der einfachen, schraubenlosen Montage zu verzichten.

Entsprechend der Neuerung wird die Aufgabe mittels eines Haltebandes gelöst, welches im wesentlichen unelastisch ist, d. h., außer der werkstoffeigenen Materialelastizität praktisch keine Formelastizität besitzt. Zwischen dem Halteband und der Kunststofftafel und/oder zwischen dieser und dem Tragbügel ist erfindungsgemäß (jeweils) ein Profil aus weichelastischem Material angeordnet, wobei die Dicke des Profils bzw. die Gesamtdicke der Profile um wenigstens ein Drittel der Einrasttiefe T elastisch zusammendrückbar ist. Unter der Einrasttiefe T wird diejenige Strecke verstanden, um die Rastelemente, die am Ende des Haltebandes einerseits und an dem Tragbügel andererseits angebracht sind, zum Zweck des Ein- oder Ausrastens relativ zueinander bewegt werden müssen.

Es ist zwar durch die DE-A-2 123 909 bereits bekannt, bei einem Dachelement mit Halteband und Kunststofftafel eine elastische Zwischenlage anzuordnen, doch hat diese Lage nicht die Funktion, zusammengedrückt zu werden, um so Rastelemente an den Haltebandenden lösen zu können.

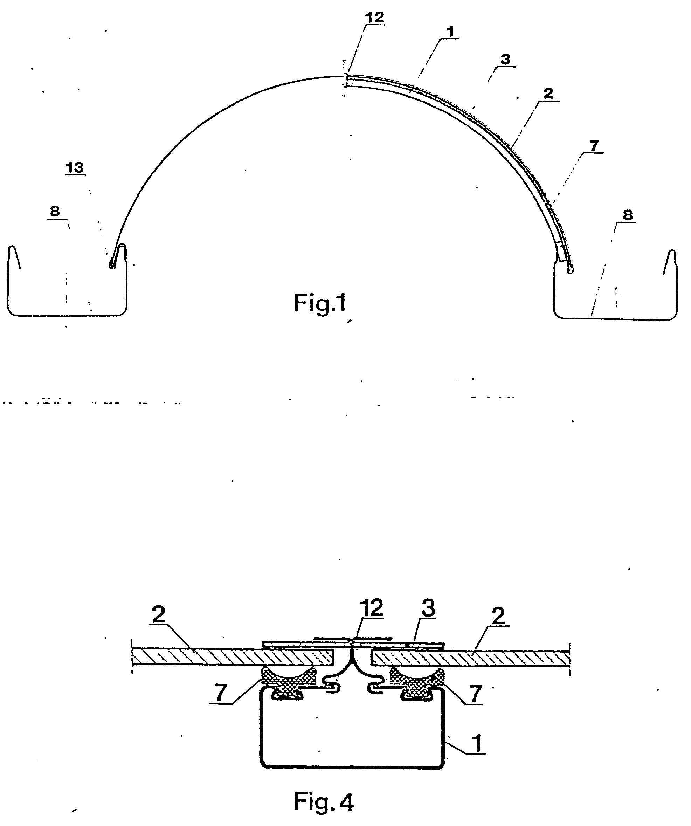

Die Neuerung ist in den Fig. 1 bis 4 an einer bevorzugten Ausführungsform dargestellt.

Fig. 1 zeigt einen Querschnitt in einer Radialebene des Tonnengewölbes.

Fig. 2 stellt in größerem Maßstab den Fuß des Gewölbebogens an der Stoßstelle zweier erfindungsgemäßer Dachelemente in Seitenansicht dar.

Fig. 3 zeigt einen Querschnitt durch den in Fig. 2 dargestellten Gewölbefuß im gleichen Maßstab, wobei das Halteband (3) in verschiedenen Stellungen während des Montagevorganges dargestellt ist.

Fig. 4 zeigt im Längsschnitt die Verriegelung des Haltebandes mit dem Tragbügel.

Obwohl das Halteband bei der erfindungsgemäßen Gestaltung im wesentlichen unelastisch ist, läßt es sich elastisch mittels Rastelementen an dem Tragbügel anbringen.

Unter der Einwirkung einer Zugkraft auf das Ende des Haltebandes wird das Profil (7) aus weichelastischem Material zusammengedrückt. Bei ausreichender Zugkraft wird das Ende des Haltebandes (3) um die Länge der Einrasttiefe T aus seiner Raststellung herausgezogen und läßt sich dann aus- bzw. einrasten. Das Profil (7) wird dabei um so stärker zusammengedrückt, je flacher der Bogen des Tragbügels (1) ist.

Wenn der Tragbügel etwa einen Halbkreisbogen darstellt, reicht es aus, wenn das Profil (7) um etwa ein Drittel der Einrasttiefe T elastisch zusammendrückbar ist. Bei einem flacheren Bogen des Tonnengewölbes muß das Profil (7) so gestaltet sein, daß es sich bis etwa um das Doppelte der Einrasttiefe T elastisch zusammendrücken läßt. Die bevorzugten Krümmungsbereiche für das Tonnengewölbe liegen zwischen einem Halbkreisbogen und einem Viertelkreisbogen; für diese Fälle reicht eine elastische Zusammendrückbarkeit des Profils (7) um ein Drittel bis zwei Drittel der Einrasttiefe T aus. Die Länge des Haltebandes und die Lage der Rastelemente (4 und 5) werden so festgelegt, daß das Profil (7) auch nach dem Einrasten noch unter einer geringen elastischen Verformung steht. Dadurch wird ein sicherer Sitz der Kunststofftafel (2) gewährleistet.

Die Kunststofftafel (2) besteht vorzugsweise aus einem im Anlieferungszustand ebenen Material, das bei der Montage elastisch über den Tragbügel (1) gebogen wird. Es muß daher eine dem vorgesehenen Bogen angepaßte Elastizität haben. Ein bevorzugtes Material ist Acrylglas, insbesondere biaxial gerecktes Acrylglas in einer Dicke von 1 bis 5 mm. Dieses Material ist bei Gewölbespannweiten von etwa 1 bis 3 m gut geeignet. Man kann auch Stegdoppelplatten aus Kunststoff einsetzen, die allerdings wegen ihrer wesentlich größeren Biegesteifigkeit nur verhältnismäßig flache Gewölbebögen zulassen. Neben Acrylglas sind als geeignete Werkstoffe auch Hart-Polyvinylchlorid und insbesondere Polycarbonat zu erwähnen, das sich wegen seiner hohen Zähigkeit besonders für verhältnismäßig stark gekrümmte Tonnengewölbe aus Stegdoppelplatten eignet.

In der Regel wird glasklares, farbloses Material eingesetzt, jedoch kommt auch dunkel getöntes, lichtstreuendes oder oberflächlich profiliertes Material in Betracht.

Die Tragbügel (1) legen die Krümmung des Tonnengewölbes fest. In der Regel werden sie in der gewünschten gekrümmten Form hergestellt und auf der Unterkonstruktion befestigt. Sie können beispielsweise aus Stahlblech oder stranggepreßten Leichtmetallprofilen bestehen. Auf einer Unterkonstruktion, die bei einer zweckmäßigen Gestaltung aus einer Rinne (8) besteht, lassen sie sich, beispielsweise mittels Steckbolzen (9), die in entsprechenden Aussparungen im oberen Rand der Rinne (8) eingesetzt werden, befestigen.

Auf der Oberseite des Tragbügels (1) oder auf der Unterseite des Haltebandes (3) oder auf diesen beiden Flächen ist ein vorzugsweise durchlaufendes Profil (7) aus weichelastischem Material angeordnet, welches bei der Montage zum Einrasten des Haltebandes zusammendrückbar ist. Da die Rasttiefe T aus Sicherheitsgründen wenigstens 5 und vorzugsweise 10 bis 20 mm beträgt, muß das Profil (7) — je nach der Krümmung der Tragbügel (1) — um ein Drittel bis zum Doppelten dieses Betrages elastisch zusammendrückbar sein. Die Materialelastizität allein reicht dafür in der Regel nicht aus. Das Profil (7) sollte deshalb eine geeignete Querschnittsform haben, bei der die erforderliche Zusammendrückbarkeit durch Formelastizität gewährleistet ist. Die Gesamtdicke des Profils beträgt zweckmäßigerweise etwa das Doppelte des Betrages, um den er beim Einrasten des Haltebandes zusammengefügt wird.

Als Werkstoff für das Profil (7) kommt vor allem Gummi in Betracht, z. B. ein rechteckiges Schaumgummiprofil oder ein Vollprofil mit mehreren elastischen Lippen. Wenn sowohl auf der Oberseite des Tragbügels (1) als auch an der Unterseite des Haltebandes (3) ein elastisches Profil (7) angebracht sind, so genügt es, wenn sie sich gemeinsam beim Einrasten des Haltebandes um den erforderlichen Betrag zusammendrücken lassen. Aus Kostengründen wird es bevorzugt, nur ein Profil (7), vorzugsweise auf dem Tragbügel (1), zu verwenden.

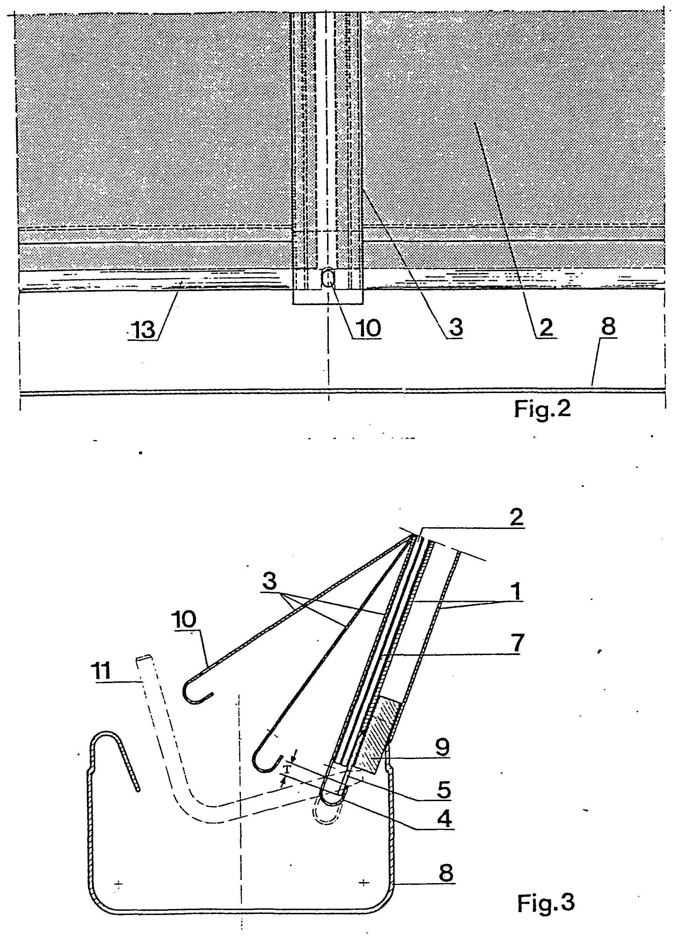

Als Rastelemente (4 und 5) eignen sich alle Vorrichtungen, die in einem formschlüssigen Eingriff mit einer Rasttiefe T stehen können und unter Zugspannung, die in Richtung des Scheitelpunktes des Gewölbes wirkt, einen in jeder Richtung festen Halt bieten. Die Rastelemente können als aneinander angepaßte Beschläge an dem Halteband (3) einerseits und dem Tragbügel (1) andererseits befestigt sein. Vorzugsweise ist das Ende des Haltebandes (3) zu einem hakenförmigen Rastelement (4) umgebogen. Es kann damit unmittelbar um das untere Ende des Tragbügels (1) greifen. Es kann jedoch auch — wie in Fig. 3 dargestellt — um ein Rastelement (5) greifen, das sich an dem unteren Ende des Tragbügels (1) abstützt. Dieses Rastelement (5) kann gleichzeitig Bestandteil der Unterkonstruktion sein, wie z. B. hier ein Teil der Rinne (8). Wesentlich ist, daß die Zugkraft aus dem Halteband (3) über die Rastelemente (4 und 5) auf den Tragbügel (1) übertragen wird.

Das Halteband (3) kann aus einem Band aus flachem Stahlblech bestehen. Zur Erleichterung der Montage kann es ein Loch (10) aufweisen, durch welches sich ein Spannschlüssel (11) stecken läßt, mit dessen Hilfe das Halteband (3) um die Einrasttiefe T heruntergezogen werden kann. Es genügt, wenn das Halteband (3) an einem Ende mit einer Rastverbindung der beschriebenen Art ausgestattet ist, während das andere Ende in jeder beliebigen anderen Weise, beispielsweise durch Nieten oder Schweißen, an dem Haltebügel (1) oder einem daran abgestützten Element befestigt sein kann.

Vorzugsweise sind jedoch beide Seiten in der gleichen Weise einrastbar.

Bei der Erstellung einer größeren Dachfläche aus einer Vielzahl der erfindungsgemäßen Dachelemente wird zweckmäßig jeweils ein Tragbügel (1) an der Stoßstelle zwischen zwei Kunststofftafeln (2) angebracht, so daß jeweils zwei Ränder einer Kunststofftafel (2) auf einem Tragbügel aufliegen. Zwischen den Rändern der Kunststofftafeln kann eine gegen seitliche Verschiebung des Haltebandes (3) wirksame Verriegelung (12) angebracht sein, die durch entsprechende Bohrungen in dem Tragbügel und dem Halteband führt und beiderseits umgebogen ist.

Die geradlinige Kante der Kunststofftafel (2) am Fuß des Tonnengewölbes kann zur besseren Steifigkeit des Gewölbes in einer U-förmigen Profilschiene (13) gefaßt sein, die wiederum an der Unterkonstruktion (8) befestigt ist. Mit den erfindungsgemäßen Dachelementen lassen sich großflächige Bedachungen — gegebenenfalls auch für vorübergehenden Gebrauch — in kurzer Zeit auf- und abbauen. Die Montage beschränkt sich auf wenige Handgriffe. Auf die Unterkonstruktion (8) werden die U-Profilschienen (13) und die Tragbügel (1) aufgesetzt, die Kunststoffscheiben aufgelegt und beiderseits in die U-Profilschienen eingeführt. Anschließend werden die Haltebänder (3) an den Stoßstellen zwischen den Kunststofftafeln aufgelegt und an beiden Seiten eingerastet.

## Patentansprüche

1. Dachelement in Tonnengewölbeform, bestehend aus wenigstens einem bogenförmigen Tragbügel (1) und aus einer zylindrisch gewölbten Kunststofftafel (2), die auf dem Tragbügel (1) aufliegt, sowie wenigstens einem Halteband (3), welches die Kunststofftafel überspannt und diese auf dem Tragbügel festhält und an seinen Enden unter Zugspannung mittels Rastverbindungen an dem Tragbügel befestigt ist, wobei die Rastverbindungen wenigstens an einem Ende des Haltebandes aus aneinander angepaßten Rastelementen (4 und 5) bestehen, die in einer Einrasttiefe T unter Zugspannung lösbar in formschlüssigem Eingriff stehen, dadurch gekennzeichnet, daß das Halteband (3) im wesentlichen unelastisch ist und daß zwischen dem Halteband und der Kunststofftafel und/oder zwischen dieser und dem Tragbügel (jeweils) ein Profil (7) aus weichelastischem Material angeordnet ist, und daß die Dicke des Profils bzw. die Gesamtdicke der Profile um wenigstens ein Drittel der Einrasttiefe T elastisch zusammendrückbar ist.

2. Dachelement nach Anspruch 1, gekennzeichnet durch zwei U-Profilschienen (13), welche die geraden Ränder der Kunststofftafel umfassen.

3. Dachelement nach den Ansprüchen 1 und 2, dadurch gekennzeichnet, daß die Kunststofftafel (2) auf dem Rand des Tragbügels (1) aufliegt, und daß wenigstens eine gegen seitliche Verschiebung des Haltebandes (3) wirksame Verriegelung (12) zwischen dem Tragbügel und dem Halteband angeordnet ist.

4. Dachelement nach den Ansprüchen 1 bis 3, dadurch gekennzeichnet, daß das an dem Tragbügel (1) angebrachte Rastelement (5) Bestandteil einer am Fuß des Tonnengewölbes angeordneten, als Unterkonstruktion geeigneten Rinne (8) ist.

## Claims

1. Roofing element in the form of a barrel arch, consisting of at least one arcuate support bracket (1) and a cylindrically curved plastics slate (2) which abuts on the support bracket (1), and at least one retaining strap (3) which extends over the plastics slate and holds the slate in place on the support bracket and is secured at its ends to the support bracket, under tensile stress, by means of latch connections, the latch connections at at least one end of the retaining strap consisting of pawl elements (4 and 5) corresponding to one another which engage releasably and positively, under tensile stress, in a locking depression T, characterised in that the retaining strap (3) is substantially inelastic and between the retaining strap and the plastics slate and/or between the plastics slate and the support bracket there is (or are) a section or profile (or profiles) (7) made of soft elastic material, and in that the thickness of the profile or the total thickness of the profiles can be compresses elastically by at least one third of the depth of the locking depression T.

2. Roofing element as claimed in claim 1, characterised by two U-shaped profiled raisl (13) which embrace the straight edges of the plastics slate.

3. Roofing element as claimed in claims 1 and 2, characterised in that the plastics slate (2) abuts on the edge of the support bracket (1) and in that at least one locking mechanism (12) operative to prevent lateral displacement of the retaining strap (3) is provided between the support bracket and the retaining strap.

4. Roofing element as claimed in claims 1 to 3, characterised in that the pawl element (5) formed on the support bracket (1) is part of a channel (8) provided at the base of the barrel arch and adapted to act as a sub-structure.

## Revendications

1. Elément de toiture en forme de voûte en berceau, se composant d'au moins un arceau porteur (1) en arc de cercle et d'une plaque de matière synthétique cintrée (2) qui repose sur l'arceau porteur (1), ainsi que d'au moins une bande de maintien (3) qui est superposée à la plaque de matière synthétique, maintient celle-ci sur l'arceau porteur et est fixée par ses extrémités à ce dernier, avec contrainte de traction, au moyen d'assemblages par crantage, les assemblages par crantage, prévus au moins à l'une des extrémités de la bande de maintien, étant formés par des éléments de crantage (4 et 5) mutuellement adaptés qui sont en prise par emboîtement de manière amovible, sous contrainte de traction, avec une profondeur de crantage T, caractérisé en ce que la bande de maintien (3) est pratiquement non élastique, en ce qu'il est disposé, entre la bande de maintien et la plaque de matière synthétique et/ou entre celle-ci et l'arceau porteur, (respectivement) un profilé (7) de matière souple, et en ce que l'épaisseur du profilé ou l'épaisseur totale des profilés peut être réduite, par compression élastique, d'un tiers au moins de la profondeur de crantage T.

2. Elément de toiture selon la revendication 1, caractérisé par deux rails (13) profilés en U qui engainent les bords droits des plaques de matière synthétique.

3. Elément de toiture selon la revendication 1 ou 2, caractérisé en ce que la plaque de matière synthétique (2) repose sur le bord de l'arceau porteur (1), et en ce qu'il est disposé, entre l'arceau porteur et la bande de maintien (3), au moins un organe d'accrochage (12) qui s'oppose au déplacement latéral de la bande de maintien.

4. Elément de toiture selon l'une quelconque des revendications 1 à 3, caractérisé en ce que l'élément de crantage (5) disposé sur l'arceau porteur (1) fait partie d'une gouttière (8) qui est située au pied de la voûte en berceau et qui convient comme construction sous-jacente.

Fig.1

Fig.4

Fig.2

Fig.3